# EUROPÄISCHE PATENTSCHRIFT

(11) **EP 0 415 086 B1**
(45) Veröffentlichungstag und Bekanntmachung des Hinweises auf die Patenterteilung: **24.05.1995**
(21) Anmeldenummer: 90114423.8
(22) Anmeldetag: 27.07.1990
(51) Int. Cl.: H04N 5/74, H04N 9/74

(54) **Einrichtung zum Erzeugen von Farbtonverschiebungen**
Chrominance displacement generation device
Dispositif pour la génération de déplacement de la chrominance

(30) Priorität: 28.08.1989 DE 3928363
(43) Veröffentlichungstag der Anmeldung: 06.03.1991
(73) Patentinhaber: Grundig E.M.V. Elektro-Mechanische Versuchsanstalt Max Grundig GmbH & Co. KG, 90762 Fürth (DE)
(72) Erfinder: Mahmud, Shabaz, Grundig E.M.V., Kurgartenstrasse 37, D-8510 Fürth/Bay (DE)

(56) Entgegenhaltungen:
- IBM TECHNICAL DISCLOSURE BULLETIN. vol. 27, no. 8, Januar 1985, NEW YORK US, Seiten 4821 - 4823; R. Baker et al: "Composite Video Color Signal Generator"
- ELEKTOR ELECTRONICS. no. 10, Oktober 1984, Amsterdam NL, Seiten 32 - 37; "Videocolour inverter"
- PATENT ABSTRACTS OF JAPAN vol. 9, no. 230 (E-343)(1953) 17 September 1985,& JP-A-60 085694 (SHARP K.K.) 15 Mai 1985,

## Beschreibung

Die Erfindung betrifft eine Einrichtung zum Erzeugen von Farbtonverschiebungen in Videogeräten, deren Signalverarbeitung digital erfolgt und von einem Microcomputer gesteuert wird.

Die Farbtoninformation eines Videosignals ist in der Phase des Farbträgersignals in Relation zum Farbsynchronsignal enthalten. Phasenfehler des Farbträgers werden bei Analogsignalen nach dem Stand der Technik durch Nachregelung der Farbträgerphase ausgeglichen, so daß ungewollte Farbtonverschiebungen beseitigt werden.

Um Trickeffekte bei Videoaufnahmen bzw. bei der Wiedergabe solcher Aufnahmen zu erzeugen, ist es bekannt, die digitalisierten Bilddaten in einen Bildspeicher abzulegen und nach Vorgabe die Inhalte dieser Bildspeicher zu verändern, wie dies z. B. in der Europäischen Patentanmeldung EP-A-0 186 206 beschrieben wird.

Weiterhin ist es üblich, die Bilddaten mittels Software-Programm zu verändern, wobei ein zusätzlicher Computer benötigt wird. Beide Vorgehensweisen haben den Nachteil, daß sie sehr aufwendig sind und damit dem Anwender im Konsumbereich vorenthalten bleiben.

Aufgabe der Erfindung ist es deshalb, eine Anordnung anzugeben, mit der auf einfache Weise Farbtonveränderungen erzeugt werden können.

Diese Aufgabe wird erfindungsgemäß dadurch gelöst, daß im digitalen Signal der Farbsynchronimpuls in seiner Phase verschoben wird. Die Phasenverschiebung wird durch die Verzögerung des digitalen Videosignals zum Zeitpunkt des Farbsynchronimpulses um einen bestimmten Wert erreicht. Je nach gewünschter Stufung der Farbveränderung wird eine entsprechende Anzahl von Verzögerungsgliedern benötigt.

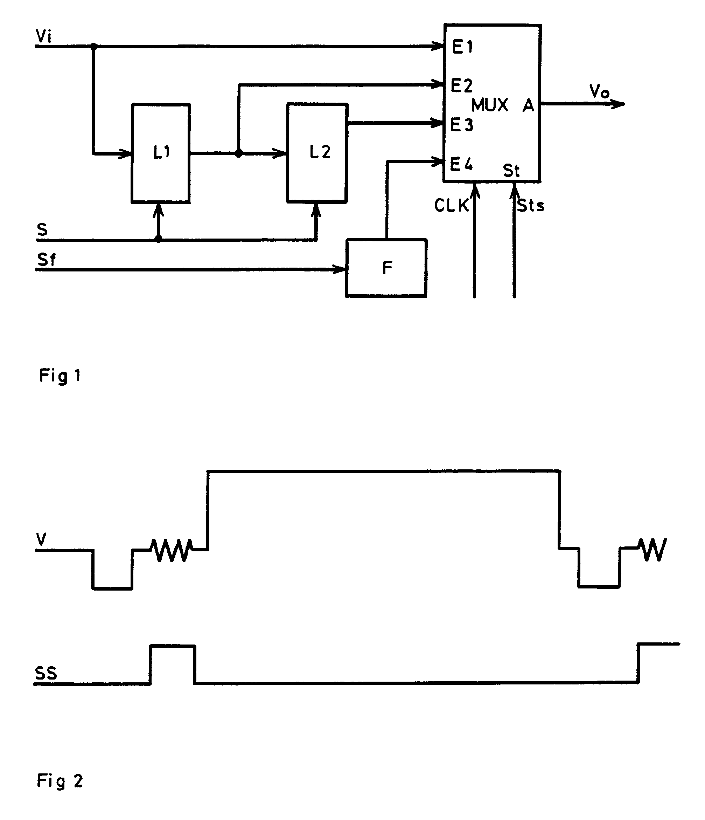

Die Erfindung wird im folgenden an Hand der Figuren 1 und 2 erläutert.

Figur 1 zeigt ein Blockschaltbild einer erfindungsgemäßen Anordnung. Hier wird das Videoeingangssignal auf den Eingang E1 eines Multiplexers MUX und an den Eingang einer Verzögerungsschaltung L1 geführt. Das verzögerte Signal am Ausgang von L1 liegt am Eingang E2 des Multiplexers MUX an und am Eingang einer zweiten Verzögerungsschaltung L2. Das zweifach verzögerte Signal am Ausgang von L2 liegt am Eingang E3 des Multiplexers MUX. Die Anordnung enthält außerdem einen Festwertgenerator F, dessen Ausgangssignal am Eingang E4 des Multiplexers MUX anliegt, der weiterhin noch einen Steuereingang St für das Steuersignal Sts und einen Eingang für das Taktsignal CLK besitzt. Am Ausgang A des Multiplexers MUX liegt das manipulierte Videosignal. Die Steuerung für den Ablauf der Manipulation erfolgt durch einen Microcomputer, der im Bockschaltbild nicht dargestellt ist. Die Verzögerungsschaltungen L1 und L2 sind vorzugsweise als Latch ausgeführt und werden mit den nötigen Steuersignalen S ebenfalls vom Microcomputer versorgt. Ebenso wird der Festwertgenerator F mit den Steuersignalen Sf angesteuert.

Der Burst, also das Bezugs- bzw. Synchronisationssignal für die Farbsignale, wird mit der oben angegebenen Anordnung um einen bestimmten Betrag verschoben, d.h. die Phase zwischen dem Burst und dem Farbträger wird verändert. Mit der Anordnung nach Fig. 1 ist eine Phasenverschiebung um 120° und um 240° möglich. Prinzipiell kann die Phasenverschiebung auch feiner eingeteilt werden. Bei einer feineren Einteilung muß aber auch die Abtastrate erhöht werden. Im vorliegenden Fall gibt es drei Möglichkeiten der Farbverschiebung, nämlich 0°, 120° und 240°. Für diese Anordnung muß entsprechend die Abtastfrequenz drei mal so groß sein wie die Frequenz des Burstsignals. Allgemein muß für eine n-stufige Farbverschiebung die Abtastfrequenz das n-fache der Burstfrequenz sein.

Die Steuerung des Multiplexers MUX und der Verzögerungsschaltungen L1 und L2 erfolgt so, daß das unverzögerte Videosignal Vi am Eingang E1 des Multiplexers MUX an seinen Ausgang durchgesteuert wird, wenn kein gesondertes Steuersignal anliegt. Wenn eine Farbverschiebung gewünscht wird, erfolgt die Steuerung so, daß nur das Burstsignal verzögert wird, während der sonstige Zeilen- bzw. Bildinhalt, sowie die weiteren Synchronisationssignale unverzögert durchgeschalten werden. Fig. 2 zeigt das Diagramm eines Zeilensignals V und darunter ein Steuersignal SS, das die beiden Verzögerungsschaltungen L1 und L2, sowie den Multiplexer MUX ansteuert. Wenn das Steuersignal SS den logischen Pegel 1 hat, werden die beiden Verzögerungsschaltungen aktiviert und der Multiplexer wird so eingestellt, daß er je nach wert eines weiteren Steuersignals den Eingang E2 oder E3 an den Ausgang legt.

Eine weitere Möglichkeit ist das Ausblenden des Burstsignals mit dieser Anordnung. Hierzu wird, während das Steuersignal SS aus Fig. 2 den logischen Pegel 1 hat, ein Festwert aus dem Festwertgenerator eingeblendet, d.h. das Signal am Eingang E4 des Multiplexers wird durchgesteuert. Der Festwert entspricht dem Austastwert nach dem Synchronimpuls. Auf diese Weise liegt am Ausgang A des Multiplexers MUX ein Schwarz/Weiß-Videosignal an.

Eine weitere vorteilhafte Ausgestaltung der Erfindung liegt in der Ausführung des Festwertgenerators. Wenn man in diesem Generator ein Signal mit der Burstfrequenz erzeugt, kann man es als Farbsynchronisationssignal benutzen, wobei der Zeitpunkt des Auftretens festgelegt werden kann. Die Farbverschiebung ist also nicht mehr auf wenige Möglichkeiten oder Abstufungen beschränkt.

## Patentansprüche

1. Anordnung zum Erzeugen von Farbtonverschiebungen in Videogeräten, deren Signalverarbeitung digital erfolgt, mit einem Microcomputer, der auch die Funktionen des Videogerätes steuert,
**dadurch gekennzeichnet,** daß
- in der Anordnung n Verzögerungsschaltungen (L1, L2) enthalten sind, die in Reihe geschaltet sind, wobei die einzelnen Ausgänge jeder Verzögerungsschaltung (L1, L2) abgreifbar sind,
- die Anordnung außerdem einen Multiplexer (MUX) enthält, an dessen n + 1 Eingängen das unverzögerte Videosignal (Vi) und die in den n Verzögerungsschaltungen verzögerten Videosignale anliegen,
- der Microcomputer so ausgeführt ist, daß er die Verzögerungsschaltungen (L1, L2) so ansteuert, daß nur das im Videosignal (Vi) enthaltene Farbsynchronisationssignal verzögert und damit seine Phasenlage verändert wird, und daß er den Multiplexer (MUX) so ansteuert, daß einer der n + 1 Eingänge an den Ausgang (A) weitergeschaltet wird.

2. Anordnung nach Anspruch 1,
**dadurch gekennzeichnet,** daß
der Multiplexer (MUX) einen weiteren Eingang enthält, an dem ein in einem Festwertgenerator (F) erzeugter Wert anliegt.

## Claims

1. Arrangement for generating hue shifts in video apparatuses whose signal processing takes place digitally, comprising a microcomputer, which also controls the functions of the video recorder,
characterized in that
- n delay circuits (L1, L2), which are connected in series, are contained in the arrangement, the individual outputs of each delay circuit (L1, L2) being capable of being tapped off,
- the arrangement also contains a multiplexer (MUX), to whose n + 1 inputs the undelayed video signal (Vi) and the video signals delayed in the n delay circuits are applied,
- the microcomputer is designed so that it triggers the delay circuits (L1, L2) in such a way that only the colour synchronization signal contained in the video signal (Vi) is delayed and its phase position is consequently altered and that it triggers the multiplexer (MUX) in such a way that one of the n + 1 inputs is transferred to the output (A).

2. Arrangement according to Claim 1, characterized in that the multiplexer (MUX) contains a further input to which a value generated in the fixed-value generator (F) is applied.

## Revendications

1. Dispositif pour produire des décalages de chrominance dans des appareils vidéo, dont le traitement des signaux s'effectue numériquement, et comportant un micro-ordinateur, qui commande également les fonctions de l'appareil vidéo,
caractérisé par le fait que
- le dispositif contient n circuits de retardement (L1, L2), qui sont branchés en série, un prélèvement pouvant être effectué sur les différentes sorties de chaque circuit de raccordement (L1, L2),
- le dispositif contient en outre un multiplexeur (MUX), aux n+1 entrées duquel sont appliqués le signal vidéo non retardé (Vi) et les signaux vidéo retardés dans les n circuits de retardement,
- le micro-ordinateur est agencé de manière à commander les circuits de retardement (L1,L2) de telle sorte que seulement le signal de synchronisation couleur contenu dans le signal vidéo (Vi) est retardé et que sa position de phase est de ce fait modifiée, et à commander le multiplexeur (MUX) de telle sorte que l'une des n+1 entrées est raccordée à la sortie (A).

2. Dispositif suivant la revendication 1, caractérisé par le fait que le multiplexeur (MUX) contient une autre entrée, à laquelle est appliquée une valeur produite dans un générateur de valeurs fixes (F).
